(19) **Europäisches Patentamt**
**European Patent Office**
**Office européen des brevets**

(11) **EP 3 118 659 B1**

(12) **EUROPEAN PATENT SPECIFICATION**

(45) Date of publication and mention
of the grant of the patent:
**07.07.2021 Bulletin 2021/27**

(51) Int Cl.:
*G02B 5/30* ^(2006.01)   *G02F 1/1335* ^(2006.01)
*G02F 1/1337* ^(2006.01)

(21) Application number: **15761823.2**

(86) International application number:
**PCT/JP2015/057065**

(22) Date of filing: **10.03.2015**

(87) International publication number:
**WO 2015/137362 (17.09.2015 Gazette 2015/37)**

(54) **GRID POLARIZER AND PHOTO-ALIGNMENT DEVICE**

NETZPOLARISATOR UND LICHTAUSRICHTER

POLARISEUR DE RÉSEAU ET DISPOSITIF DE PHOTOALIGNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.03.2014 JP 2014048221**

(43) Date of publication of application:
**18.01.2017 Bulletin 2017/03**

(73) Proprietor: **Ushio Denki Kabushiki Kaisha
Tokyo-to
100-8150 (JP)**

(72) Inventors:
• **TSURUOKA Kazuyuki
Tokyo 1008150 (JP)**

• **ARAKI Ryuhei
Tokyo 1008150 (JP)**
• **NAWAKI Yohei
Tokyo 1008150 (JP)**

(74) Representative: **Tomerius, Isabel
Lang & Tomerius
Patentanwaltspartnerschaft mbB
Rosa-Bavarese-Strasse 5
80639 München (DE)**

(56) References cited:
**WO-A1-2013/032570   WO-A1-2013/190680
JP-A- 2010 501 085   US-A1- 2008 137 188
US-A1- 2009 231 702   US-A1- 2014 009 823**

• **None**

Printed by Jouve, 75001 PARIS (FR)

**Description**

TECHNICAL FIELD

The present invention relates to a polarization technology using a grid polarizer.

BACKGROUND ART

Polarizing elements (polarizers) designed to obtain polarized light (beam, ray) are known in the form of various products such as customer goods (e.g., polarized sunglasses) and optical elements (e.g., polarizing filters and polarizing films). Such polarizing elements are also used in various types of display devices such as liquid crystal display devices. In general, the polarizing elements can be categorized into a plurality of groups depending upon a method of extracting polarized light. One of the groups is a wire grid polarizer.

The wire grid polarizer includes a transparent substrate and a fine stripe grid disposed on the transparent substrate. The grid is made from a metal (conductive material). The grid has a plurality of linear portions (segments) spaced from each other. The wire grid polarizer can function as a polarizing element when the gap (pitch) between each two adjacent linear segments of the grid is smaller than the wavelength of light to be polarized. The wire grid polarizer is equivalent to a flat metal for that polarized light, among the linearly polarized light, which has an electric field component in a longitudinal direction of the grid (length direction of each linear segment). Thus, the wire grid polarizer reflects such polarized light. On the other hand, the wire grid polarizer is equivalent to the mere transparent substrate for that polarized light, among the linearly polarized light, which has the electric field component in a direction perpendicular to the longitudinal direction of the grid (length direction of each linear segment). Thus, the wire grid polarizer allows such polarized light to pass (transmit) through the transparent substrate and become the outgoing light (emitted light). Thus, the linearly polarized light is only emitted from the wire grid polarizer in the direction perpendicular to the longitudinal direction of the grid. If a posture or orientation of the wire grid polarizer is appropriately controlled such that the longitudinal direction of the grid is directed to a desired direction, then it is possible to obtain the polarized light that has an axis of polarization (direction of the electric field component) directed to a desired direction.

In the following description, the linearly polarized light that has an electric field component in the longitudinal direction of the grid is referred to as an "s polarized light" and the linearly polarized light that has an electric field component in a direction perpendicular to the longitudinal direction of the grid is referred to as "p polarized light" for the sake of description. Generally, a wave that has an electric field perpendicular to an incident plane (plane perpendicular to a reflecting plane, and including incident light and reflected light) is referred to as "s wave," and a wave that has an electric field in parallel to the incident plane is referred to as "p wave." In this specification, the longitudinal direction of the grid is assumed to be perpendicular to the incident plane (plane of incidence), and the "s polarized light" and the "p polarized light" are defined as described above.

Fundamental indices used to indicate the performances (capabilities) and features (properties) of such polarizer include an extinction ratio ER and a transmissivity (transmittance) TR. The extinction ratio ER is a ratio (Ip/Is) of an intensity (Ip) of the p polarized light among the polarized light, which transmits the polarizer, to an intensity (Is) of the s polarized light among the polarized light. Generally, the transmittance TR is a ratio of an energy of the outgoing p polarized light to a total energy of the incident s polarized light and p polarized light (TR = Ip/(Is + Ip)). The extinction ratio ER of an ideal polarizer is infinite, and the transmittance of the ideal polarizer is 0.5 (50%).

It should be noted that the polarizer (polarizing element) of the present invention is not limited to a polarizer that has a grid made from metallic linear segments (made from wire). In the following description, therefore, the polarizer (polarizing element) of the present invention is generally referred to as "grid polarizer" or "grid polarizing element."

LISTING OF REFERENCES

PATENT LITERATURE DOCUMENTS

PATENT LITERATURE DOCUMENT 1: Japanese Patent Application Laid-Open Publication No. 2011-8172

US 2014/0009823 A1 is directed to a method of manufacturing a polarized light splitting element. The method comprises forming a convex part having a refractive index of 1 to 10 and an extinction coefficient of 0.5 to 10 with respect to light having a wavelength of 300 nm on a substrate using a solution process. The convex part can be formed by forming a resist in a grid type having regular gaps on the substrate, and coating a coating solution on the gap of the grid.

US 2008/0137188 A1 is directed to a wire grid polarizer and a method of manufacturing the same. The wire grid polarizer includes a substrate adapted to transmit predetermined wavelengths of light, a plurality of dielectric wires extending parallel to one another along a first direction on the substrate, the dielectric wires including a dielectric material adapted to transmit the predetermined wavelengths of light, and a plurality of metal wires extending along the first direction between the dielectric wires, wherein sidewalls of the metal wires include portions in contact with sidewalls of the dielectric wires and portions not in contact with the sidewalls of the dielectric wires.

US 2009/0231702 A1 is directed to optical films and method of making the same. In general, in a first aspect, the invent features a method, including providing a layer having a plurality of spaced-apart lines of a first material extending along a first direction and forming a line of a second material on opposing surfaces of each line of the first material, the first and second materials being different and adjacent lines of the second material being discontinuous. After forming the lines of the second material, forming pairs of spaced-apart lines of a third material between adjacent pairs of the lines of the second material, wherein each line of the third material is spaced apart from the closest line of the second material and the first and third materials are different.

WO 2013/032570 A1 discloses a fine pitch wire grid polarized. A multi-step wire grid polarizer can comprise a base with a plurality of parallel multi-step ribs disposed on the base. A coating is disposed along vertical surfaces of the steps. The document suggests several variations of parameters to further improve the grid polarizer. However, contrary to the present invention, the suggested variations are or are closely related to variations of the aspect ratio.

SUMMARY OF THE INVENTION

PROBLEMS TO BE SOLVED BY THE INVENTION

One of the important factors to decide the polarizing capability of the grid polarizer is an aspect ratio of the grid. The aspect ratio of the grid is a ratio of the height of the linear segment of the grid to the width of the linear segment of the grid. In general, the grid polarizer has a greater extinction ratio as its aspect ratio increases.

As such, it is necessary for the grid to have a high aspect ratio in order to obtain a grid polarizer having a high extinction ratio. In general, however, it is difficult to manufacture a polarizer that has a grid structure with a high aspect ratio. The grid polarizer is manufactured by forming a grid on a transparent substrate such as a silica substrate. The grid is a fine structure because the distance (gap) between each two adjacent linear segments is smaller than the wavelength of the light. Naturally, manufacturing the grid is not easy. The grid is usually formed with a photolithography technology, but the photolithography technology is difficult to form the grid that has a sufficient mechanical strength or rigidity. This tendency becomes significant as the aspect ratio increases.

Because the distance between each two adjacent linear segments is smaller than the wavelength of the light, the grid structure to be manufactured should have a finer structure as the wavelength of the light to be polarized becomes shorter. This further makes the manufacturing of the grid difficult. A decade ago, therefore, it is said that manufacturing the grid polarizer that can polarize light in a short wavelength range, such as ultraviolet light, is theoretically possible but practically difficult. Today, however, the fine machining for the semiconductor manufacturing process is rapidly progressing, and the fine machining technology makes it almost possible to practically manufacture the polarizer that can be used to short wavelength light such as ultraviolet light. However, when the performance of the grid polarizer should be enhanced with the extinction ratio or the like, then the only solution currently available is "increasing the aspect ratio of the grid." Thus, the difficulty to be encountered in the manufacturing becomes the bottleneck when enhancing the performance of the grid polarizer and using short wavelength light.

The study conducted by the inventors showed that a conventional grid polarizer, which included a grid made from metal such as aluminum, could not provide an expected polarizing capability when short wavelength light such as ultraviolet light should be polarized. The reasons are not obvious completely, but it is assumed that one reason may be insufficient reflectance (reflection coefficient) of the ultraviolet light to the metal, and another reason may be deterioration of the metal by the ultraviolet light.

The present invention has been conceived in consideration of the above-described problems, and an object of the present invention is to provide a grid polarizer that provides a higher performance, is easy to manufacture, and has higher polarization capability even for short-wavelength light such as ultraviolet light.

SOLUTION TO THE PROBLEMS

The above-mentioned problems are solved by the invention as claimed in independent claim 1. The dependent claims are directed to advantageous embodiments.

According to the present invention, the grid polarizer comprises a transparent substrate made from quartz glass; and a stripe-shaped grid provided on the transparent substrate, the grid including a plurality of linear segments, the grid being made from dielectrics or semiconductors, and the grid being having portions that satisfy, in effect, relation of $t < T$ in a periodic fashion, where for each said linear segment of the grid, $t$ represents a first gap between the linear segment concerned and an adjacent linear segment on one side of the linear segment concerned, and $T$ represents a second gap between the linear segment concerned and another adjacent linear segment on an opposite side of the linear segment concerned, wherein the gaps $t$ and $T$ are air gaps. According to the present invention, a ratio of $t/T$ having a value that causes a phase of dense part propagating light to delay at least $\pi/2$ for ultraviolet light relative to a phase of a coarse part propagating light, where polarized light that has an electric field component in a length direction of each said linear segment of the grid is s-polarized light, the s-polarized light propagating between two linear segments that are adjacent to each other over the first gap $t$ is the dense part propagating light, and the s-polarized light propagating between two linear segments that are adjacent to each other over the second gap $T$ is the coarse part propagating light, the first gap t being a distance measured at a light exit of the dense part propagating light, the second gap T being a distance measured at a light exit of the coarse part propagating light, wherein the first gap t is from 30 nm to 40 nm and wherein the total of t + T is equal to 140nm.

According to a preferred embodiment, the grid includes a plurality of pairs of said linear segments provided on the transparent substrate, with each said pair being constituted by two adjacent said linear segments, the s-polarized light (Ls) propagating between the two linear segments of each said pair being the dense part propagating light, and a distance between the two linear segments of each said pair being the first gap t, the s-polarized light propagating between each two adjacent pairs being the coarse part propagating light, and a distance between the each two adjacent pairs being the second gap T. Preferably, the distance t between the two linear segments in each said pair gradually decreases in a propagating direction of the dense part propagating light. Alternatively, the distance t between the two linear segments in each said pair is constant in a propagating direction of the dense part propagating light.

According to another preferred embodiment, the grid is made from titanium oxide, and the transparent substrate is made from silica.

According to a preferred embodiment, the said plurality of linear segments stand vertically from the transparent substrate. Alternatively, said plurality of linear segments stand slant from the transparent substrate.

According to another aspect of the invention, the invention is directed to a photo-alignment apparatus comprising: a light source; and a grid polarizer, the grid polarizer being disposed between a light irradiation area, where a photo-alignment film is placed, and the light source.

ADVANTAGEOUS EFFECTS OF THE INVENTION

As will be described below, the invention of claim 1 or 2 is directed to an attenuation-type grid polarizer that includes a dielectric grid or a semiconductor grid. The s-polarized light is attenuated by the grid polarizer by taking an advantage of a phenomenon that the dense part propagating light delays $\pi/2$ or more, in terms of the phase, relative to the coarse part propagating light. Therefore, it is possible to increase an extinction ratio without increasing an aspect ratio. Thus, the present invention provides a grid polarizer that is easy to manufacture and exhibits a high performance.

According to the invention of claim 3, the spacing (distance) between the two linear segments in each pair of linear segments decreases in the propagating direction of the dense part propagating light. Thus, the manufacturing process becomes easier.

According to the invention of claim 4, the apparatus uses a grid polarizer that has a high extinction ratio. Thus, it is possible to perform a photo-alignment process at high quality. As such, it is possible to obtain high quality photo-alignment film. This significantly facilitates the manufacturing of high-image-quality displayers.

BRIEF DESCRIPTION OF THE DRAWINGS

Fig. 1 illustrates a schematic perspective view of a grid polarizer according to a first embodiment of the present invention.

Fig. 2 illustrates a perspective view that schematically shows a behavioral model (operating principle) of an attenuation-type grid polarizer.

Fig. 3 shows results obtained from a simulation experiment, which confirmed a waving motion of an x-direction magnetic field component Hx.

Fig. 4 is a schematic front cross-sectional view showing a phenomenon that an electric field Ey is additionally generated by the waving motion (rotation) of the x-direction magnetic field component Hx.

Fig. 5 shows results obtained from a simulation experiment, which was conducted by the inventors, to study an alternative measure for improving the performance, in place of a high aspect ratio approach, for an attenuation-type grid polarizer.

Fig. 6 shows results obtained from a simulation experiment, which confirmed an improvement of an extinction ratio by means of grid localization (localized arrangement of the linear segments in the grid).

Fig. 7 shows results obtained from a simulation experiment, which confirmed an improvement of an extinction ratio by means of grid localization.

Fig. 8 shows results obtained from a simulation experiment that confirmed an improvement of an extinction ratio by means of grid localization.

Fig. 9 shows results obtained from a simulation experiment that confirmed an improvement of an extinction ratio by means of grid localization.

Fig. 10 is a set of schematic views to show a process of manufacturing the grid polarizer according to the first embodiment of the present invention.

Fig. 11 is a schematic cross-sectional view of a photo-alignment apparatus that includes the grid polarizer of the embodiment of the present invention, and shows an exemplary use of the grid polarizer.

Fig. 12 is a schematic front view of a grid polarizer according to a second embodiment of the present invention.

Fig. 13 shows results obtained from a simulation experiment applied to the configuration of the embodiment shown in Fig. 12.

Fig. 14 is a set of schematic views to show a preferred method of manufacturing the grid polarizer according to the second embodiment of the present invention.

DETAILED DESCRIPTION OF EMBODIMENTS

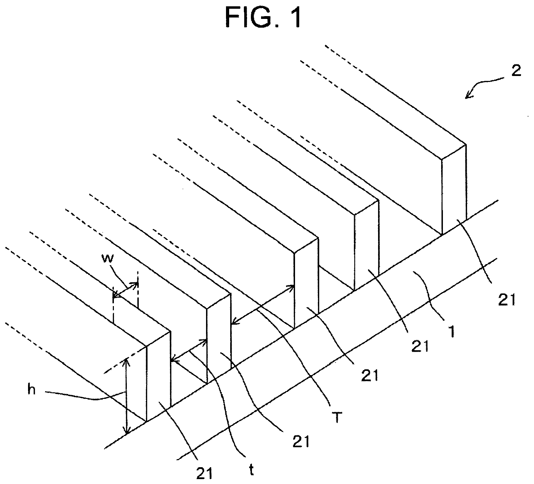

Modes (embodiments) for carrying out the present invention will now be described. Fig. 1 is a schematic perspective view to schematically show a grid polarizer according to a first embodiment. The grid polarizer shown in Fig. 1 includes, as its major components, a transparent substrate 1, and a grid 2 provided on the transparent substrate 1.

The transparent substrate 1 is "transparent" because the substrate 1 has sufficient transmissivity to a target wavelength (wavelength of light to be polarized by the polarizer). In this embodiment, the target wavelength is a wavelength of ultraviolet light, and the material of the transparent substrate 1 is quartz glass (e.g., synthetic quartz).

As shown in Fig. 1, the grid 2 has a stripe shape that includes a plurality of parallel linear segments 21. Each of the linear segments 21 is made from a dielectric such as titanium oxide or titanium nitride, or a semiconductor such as an amorphous silicon. In the grid 2, the linear segments 21 are localized (unevenly arranged). Specifically, when one linear segment (linear segment concerned) 21 is looked at, a distance between the linear segment 21 concerned and an adjacent linear segment on one side of the linear segment 21 concerned is referred to as t, and a distance between the linear segment 21 concerned and an adjacent linear segment on an opposite side of the linear segment 21 concerned is referred to as T, then the grid includes portions that satisfy, in effect, the relation t < T in a periodic fashion. For the sake of description, the ratio t/T is referred to as a localization ratio in the following description.

The above-mentioned "portions that satisfy, in effect, the relation t < T" refer to those portions which meet a condition that the distance (spacing to an adjacent linear segment) t on one side of the linear segment is, in effect, different from the distance T on the opposite side of the linear segment. The phrase "in effect" means that the distance variations which are produced due to manufacturing tolerances are not included, and means that a condition of "t is not equal to T" is intentionally met to cause a phase delay (will be described). The phrase "in a periodic fashion" means that it is not random. If a condition of "t is not equal to T" is accidentally met due to the manufacturing tolerance, it is random. In this invention, a condition of "t is not equal to T" is intentionally met to cause the phase delay (will be described), and therefore the condition of "t is not equal to T" is met on the grid in the periodic fashion. It should be noted that occurrence of the portions that satisfy the relation t < T in the periodic fashion is observed when viewed in a direction perpendicular to the length direction of the linear segment 21 on the surface of the transparent substrate 1.

The above-described configuration of the grid polarizer according to this embodiment was arrived at by the inventors as a result of the hard work (study) on the configuration of the grid polarizer by the inventors. Specifically, the inventors studied the grid polarizer by attempting to improve the polarizing performance without increasing the aspect ratio, and attempting to improve the polarizing performance to the short wavelength light such as ultraviolet light.

Firstly, the inventors prepared a polarizer on the basis of a fundamentally different idea from the conventional approach. The conventional wire grid polarizer can be called "reflection-type grid polarizer." Specifically, the conventional grid is made from metal having high reflectance, and the grid reflects linearly polarized light that has an electric field component in the length direction of the grid so that the linearly polarized light does not transmit through the transparent substrate 1. The grid polarizer configured on the basis of such theory needs to have a high aspect ratio in order to enhance the performance of the grid polarizer, as described above. Thus, there is a problem that such grid polarizer cannot have a high polarizing capability to the short wavelength light such as ultraviolet light.

Apart from the principle employed by such conventional grid polarizer, the inventors developed a new grid polarizer, and this grid polarizer can be called "attenuation-type grid polarizer." This polarizer takes advantage of a fact that particular polarized light selectively attenuates as the polarized light propagates the polarizer. Unlike the conventional grid polarizer, the attenuation-type grid polarizer of this embodiment uses, as the material of the grid, a dielectric or semiconductor. Metal is used as the grid material in the conventional grid polarizer. In addition, the attenuation-type grid polarizer of this embodiment has a plurality of linear segments that are arranged in a localized manner (t is not equal to T).

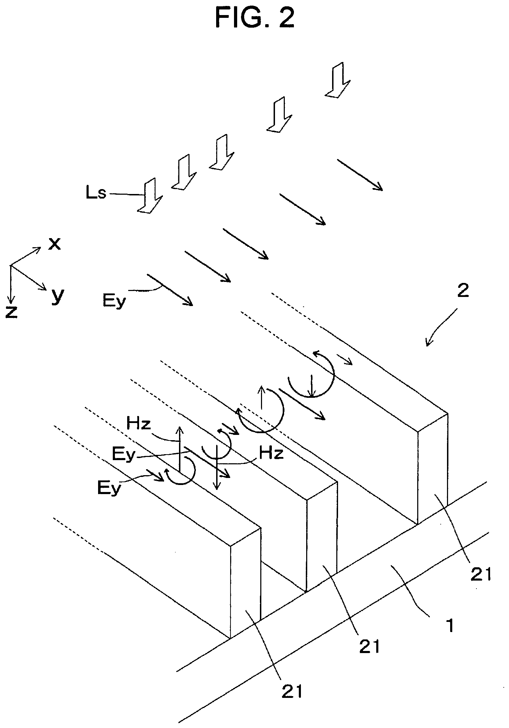

Firstly, how the light propagates in the grid polarizer when the dielectric or semiconductor is employed as the grid material instead of the metal will described. It should be assumed here that the grid does not have the linear segments arranged in the localized manner (t = T). Fig. 2 is a schematic perspective view of a behavioral model of the attenuation-type grid polarizer. As described above, the grid polarizer is a polarizing element that allows the p-polarized light to transmit therethrough but does not allow the s-polarized light to transmit therethrough. Thus, the behavior of the s-polarized light should primarily be studied.

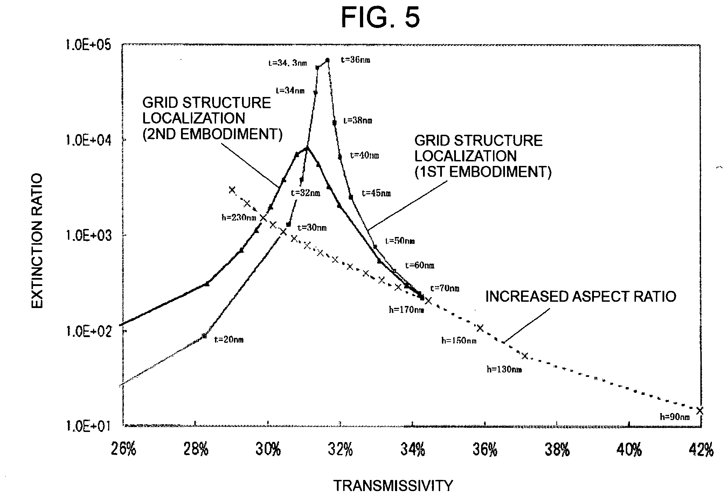

In Fig. 2, it should be assumed for the sake of description that the light propagates from the top of the drawing sheet toward the bottom of the drawing sheet, and this direction is referred to as "z-direction." The extending direction of each linear portion 21 of the grid 2 is referred to as "y-direction." Accordingly, the s-polarized light (designated at "Ls" in Fig. 5) has an electric field component Ey. The magnetic field component (not shown in Fig. 2) of the s-polarized light is present in the x-direction (Hx). When the s-polarized light enters the grid 2 of the grid polarizing element, the electric field Ey of the s-polarized light is weakened due to the dielectric constants of the grid 2. It should be noted that the medium (substance) between each two adjacent linear segments 21 is generally the air. Thus, the dielectric constant of the medium between the neighboring linear segments 21 is smaller than the grid 2. Accordingly, the electric field Ey is less weakened in the spacing between the linear segments 21 than in the grid 2.

As a result, a rotating component of the electric field Ey is generated in the x-y plane. Then, two opposite magnetic fields Hz are induced in the z-direction depending upon the intensity of rotation of the magnetic field in the x-y plane. This phenomenon is defined by the Maxwell's equation (1) that corresponds to the Faraday's electromagnetic induction.

$$RotE = -\frac{\partial B}{\partial t} \qquad (1)$$

Therefore, one of the two magnetic fields Hz is directed in the forward direction of the light propagation and the other magnetic field Hz is directed backward, with the border being the highest magnetic field Ey at the center between each two adjacent linear segments 21 of the grid 2. Although not shown in Fig. 2, the magnetic field Hx in the x-direction has the same phase as the electric field Ey and is directed to the negative side of the x-axis. The magnetic field component Hx in the x-direction is pulled by the generated magnetic field component Hz of the z-direction such that the magnetic field component Hx deforms like a wave.

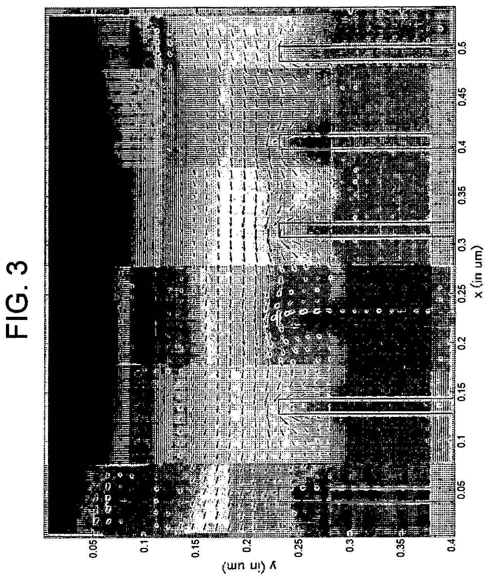

Fig. 3 shows results of a simulation experiment that confirmed the waving motion of the x-direction magnetic field component Hx. Fig. 3 shows the simulation results when the material of the grid 2 was titanium oxide, and the optical constants had particular values (n=2.35, k=1.31) at the wavelength of 254 nm. In Fig. 3, the width of each linear segment 21 of the grid 2 was 15 nm, the distance between each two adjacent linear segments 21 was 90 nm, and this distance was unchanged in the entire grid 2. The height of each linear segment 21 was 170 nm. The simulation was conducted on the basis of FDTD (Finite-Difference Time-Domain) method. The software used for the simulation was MATLAB (registered trademark) of Mathworks, Inc. of Massachusetts, USA.

In Fig. 3, the upper dark area represents the minus component of the electric field Ez, and the middle light-colored area represents the plus component of the electric field Ez. The magnetic field is represented by the vectors (arrows). As shown in Fig. 3, the s-polarized light that is approaching the grid 2 has no Hz component, and therefore the s-polarized light has only the Hx component. However, it was confirmed that the magnetic field was waving in the x-z plane because of the Hz component of the s-polarized light that is approaching the grid 2. As understood from Fig. 3, the waving motion of the magnetic field can be referred to as "clockwise rotation of the magnetic field." It should be noted that in Fig. 3, the y-direction is the light propagating direction, and the z-direction is the length direction of the grid 2 (length direction of the linear segment). This is different from Fig. 2.

As the magnetic field component Hx waves (rotates) in this manner, another electric field is generated in the y-direction in Fig. 2 in accordance with the Maxwell's equation (2) that corresponds to the Ampere-Maxwell's law.

$$RotH = j + \varepsilon \frac{\partial E}{\partial t} \qquad (2)$$

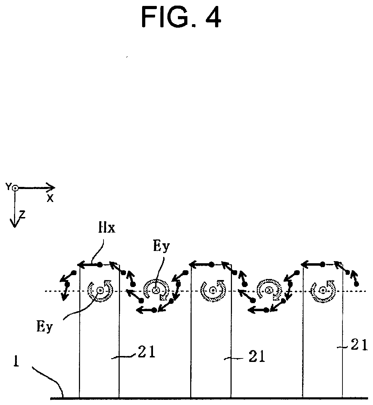

This is schematically illustrated in Fig. 4. Fig. 4 is a schematic front cross-sectional view that schematically depicts that the waving (rotation) of the x-direction magnetic field component Hx creates a new electric field Ey.

As depicted in Fig. 4, the waving (rotation) of the magnetic field component Hx in the x-z plane generates in each of the linear segments 21 of the grid 2 the first electric field Ey that is directed perpendicularly upward from the drawing sheet of Fig. 2 (toward a reader of this specification) and generates the second electric field Ey that is directed in the opposite direction, in each of the gaps (spacing) between the linear segments 21. Because the original electric field Ey of the incident s-polarized light is directed perpendicularly upward from the drawing sheet of Fig. 2, the second electric field Ey between the linear segments 21 is counterbalanced by the rotation of the magnetic field such that the wave of the magnetic field is split into smaller parts. Consequently, the first electric field Ey is locally present (localized) in each of the linear segments 21 of the grid 2. The energy of the s-polarized light is absorbed by the linear segments 21 in accordance with the material of the linear segments 21, and is attenuated while the s polarized light propagates in the grid 2.

The electric field component of the p-polarized light is directed in the x-direction (Ex). However, when viewed in the y-direction, the dielectric constant distribution is uniform, and therefore the rotating component of the electric field is not generated in effect. For the p-polarized light, therefore, the localization of the electric field in the grid 2 does not occur in effect, and the splitting (disconnection) of the waving motion in the grid 2 does not occur in effect, unlike the s-polarized light. When the attenuation-type grid polarizer of this embodiment is used, it is assumed that the s-polarized light and the p-polarized light propagate in the above-described different fashions because of the different spatial dielectric constant distributions. Incidentally, it was also confirmed that the s-polarized light and the p-polarized light propagated in the different fashions even when the grid 2 was made from a semiconductor material such as amorphous silicon.

The inventors confirmed that it was possible to obtain the polarization with the grid polarizer that was made from such dielectric or a semiconductor. In particular, the inventors confirmed that such grid polarizer was useful to the polarization of light in a short wavelength range, such as ultraviolet light. The inventors assume that the reason why this is useful to the polarization of the light in the short wavelength range is because the absorption of the light by (in) the grid is utilized. Specifically, the inventors assumed that the s-polarized light was localized in the grid 2, as described above, and the attenuation took place due to the absorption in the grid 2. The inventors continued the study to further improve the polarization performance of the attenuation-type grid polarizer. In the course of the study, the inventors focused on the localization of the linear segments of the grid as described above, and found that the extinction ratio was particularly increased under particular localization conditions. This will be described below.

Fig. 5 shows results of the simulation experiment that was conducted by the inventors in order to develop (study) a solution that can enhance the performance of the attenuation-type grid polarizer without increasing the aspect ratio. In the simulation experiment shown in Fig. 5, the inventors checked how the extinction ratio and the transmissivity changed when the aspect ratio of the grid and the localization ratio of the grid changed. The simulation was conducted with the RCWA (Rigorous Coupled-Wave Analysis) method, and the software distributed by NIST (National Institute of Standards and Technology) of USA (http://physics.nist.gov/Divisions/Div844/facilities/scatmech/html/grating.htm). The material of the grid was titanium oxide, and the material of the transparent substrate was silica (quartz). The wavelength of the light to be polarized was 254 nm. The optical constants of the material(s) are necessary for the simulation. Here, the titanium oxide had the following optical constants. Namely, the refractive index was 2.35, and the extinction coefficient (imaginary part of the refractive index) was 1.31. The quartz had the following optical constants. Namely, the refractive index was 1.5, and the extinction coefficient was 0.

Firstly, the width w of each linear segment of the grid was 20 nm and not altered, and the gap (distance) between neighboring linear segments was 70 nm and not altered whereas the height h of each linear segment was altered to alter the aspect ratio in the simulation. In Fig. 5, the simulation results are indicated by the "x" marker. In the simulation, the initial height (starting height) h was 90 nm (aspect ratio was 4.5), and the height h was increased to increase the aspect ratio, as shown in Fig. 5. It should be noted that the horizontal axis of Fig. 5 represents the transmissivity (transmittance), and the vertical axis represents the extinction ratio (logarithmic scale).

It is understood from Fig. 5 that as the aspect ratio increases, the transmissivity decreases but the extinction ratio increases. For example, when the grid height h is 230 nm (aspect ratio was 11.5), the transmissivity drops to approximately 30% but the extinction ratio has a high value, i.e., over 1,000. In reality, however, it is difficult to manufacture the grid that has such high aspect ratio.

Next, the inventors conducted another simulation experiment with a grid that had linear segments arranged in an uneven manner (localized manner). Specifically, a grid having the same dimensions as the above-described grid was prepared, with the grid height h being 170 nm (aspect ratio was 8.5), because this grid was relatively easy to prepare. This grid was employed as a standard model. On the basis of the standard model, the grid that had linear segments arranged in a localized manner was prepared, and the simulation was conducted to obtain the extinction ratio and the transmissivity. The total of t + T was 140 nm and not altered, but t was decreased and T was increased so that t/T was altered. In Fig. 5, ■ (black square) indicates the extinction ratio and the transmissivity at the respective t. In this simulation, t was gradually decreased (and T was increased) as shown in Fig. 5, and the extinction ratio and the transmissivity were calculated.

As shown in Fig. 5, when t was decreased (i.e., when the grid gap was localized), the extinction ratio steeply increased whereas the transmissivity did not decrease very much, as compared to a case where the aspect ratio was increased. The increase of the extinction ratio became significant as t reached approximately 50 nm, and the extinction ratio had a peak value when t was 36 nm. As t was further decreased, the extinction ratio decreased together with the transmissivity. The localization of the grid gap means the uneven arrangement of the linear segments in the grid (localization in (of) the grid structure).

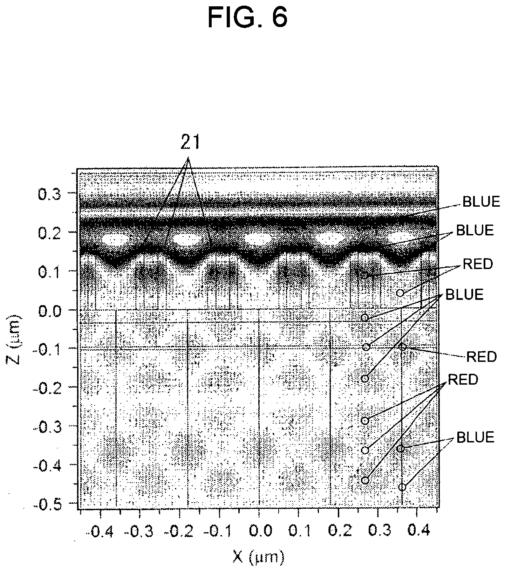

As described above, the results of the simulation experiments revealed that the improvement of the extinction ratio was achieved in a certain range by the localization of the grid structure, and this range included a particular zone in which the extinction ratio significantly increased. In order to analyze the reasons for this phenomenon in detail, the inventors made some calculations to observe the states (behavior) of the wave front. The calculation was conducted with an analysis software "FULLWAVE" (product name), which was marketed by CYBERNET SYSTEMS, CO., LTD. (Headquarters is located in Chiyodaku, Tokyo). Results of the calculation are shown in Fig. 6 to Fig. 9. Specifically, Fig. 6 to Fig. 9 show results of the simulation experiments that confirmed the improvement (increase) of the extinction ratio by the localization of the grid structure.

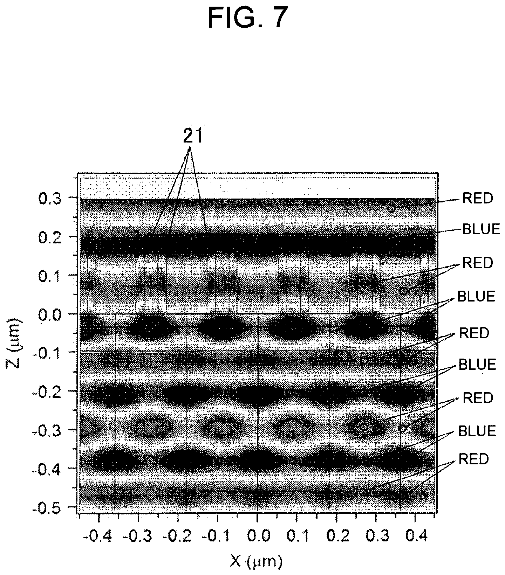

Fig. 6 to Fig. 8 show the propagation of the s-polarized light that has passed through the grid polarizer. The state of the wave front is indicated by the above-mentioned software. The actual graph (actual image) is a color image, and Fig. 6 to Fig. 8 are the drawings that are obtained by black-white conversion from the color image. In these drawings, the actual colors in the color image are mentioned by words for reference. Among these drawings, Fig. 6 and Fig. 7 show the light propagation through the grid polarizer of the first embodiment, which has the localized grid structure. Specifically, Fig. 6 illustrates the propagation of the s-polarized light (TE wave), and Fig. 7 illustrates the propagation of the p-polarized light (TM wave). In each of Fig. 6 and Fig. 7, the incident plane is parallel to the drawing sheet of Fig. 6 (Fig. 7), and the length direction of each linear segment of the grid extends perpendicular to the drawing sheet of Fig. 6 (Fig. 7). In order for a reader of this specification to understand the positions of the respective linear segments 21, the linear segments are shown over the image in the superimposed manner.

Fig. 6 shows the s-polarized light, and therefore the electric field has a distribution in a direction perpendicular to the drawing sheet of Fig. 6, i.e., the electric field is even along the drawing sheet. For the sake of easy illustration, Fig. 7 does not show the electric field, but the phase of the magnetic field. Because Fig. 7 shows the p-polarized light (TM wave), the magnetic field has a distribution in a direction perpendicular to the drawing sheet of Fig. 7 and the magnetic field is even along the drawing sheet. It should be noted in Fig. 6 and Fig. 7 that the difference in color corresponds (represents) the difference in phase. In short, the difference in color corresponds to the difference in polarity. For example, blue indicates plus and red indicates minus.

As shown in Fig. 6, the s-polarized light is a TE wave, and therefore the phase of the electric field is even (uniform) in a direction perpendicular to the grid (i.e., the width direction of the drawing sheet) before the light enters the grid. The phase of the electric field has no disturbance before the light enters the grid. As the light enters the grid, the refractive index distribution becomes uneven, and the disturbance correspondingly appears in the phase. Specifically, as shown in Fig. 6, the wave that propagates the two neighboring linear segments 21 having the narrow gap t (hereinafter, referred to as "condense part") has a gradually delayed phase relative to the phase of the wave that propagates the two neighboring linear segments 21 having a wide gap T (hereinafter, referred to as "coarse part"). The delay of the phase is caused because the light propagates the portions having a high refractive index and the phase velocity becomes slow.

Because such phase delay occurs, the light that propagates the dense part and exits from the grid (hereinafter, referred to as "dense part propagating light") has a considerable phase difference from the light that propagates the coarse part and exits from the grid (hereinafter, referred to as "coarse part propagating light"). After the light exits from the grid, the spatial refractive index distribution of the light becomes even. Thus, no more phase difference is generated, and the light propagates with the phase difference being maintained. If the dense part propagating light is only looked at, it can be said that a plurality of light sources are arranged on the transparent substrate of Fig. 6 and emit the light at the same phase. The light emitted from each light source is a substantially spherical wave. The light beams from the respective light sources overlap each other as the light beams proceed away from the transparent substrate. Then, the light beams become a plane wave. This is similar to a model in which the respective elementary waves overlap under the Huygens principle, and propagate as a plane wave.

Next, the coarse part propagating light is only looked at. It can be said that a plurality of light sources are arranged on the transparent substrate of Fig. 6 and emit the light at the same phase although this "same phase" is different from the phase of the dense part propagating light. As the light beams from the respective light sources proceed away from the transparent substrate, the light beams overlap each other and form a plane wave. The plane wave formed from the light beams that have propagated the dense part has a phase difference relative to the plane wave formed from the light beams that have propagated the coarse part. When the phase difference between the two light beams is equal to or greater than $\pi/2$, then these light beams counterbalance each other. On the basis of such theory, as the light beams have transmitted through the grid, the light beams counterbalance each other, and the intensity of the light beams is weakened even if the s-polarized light is not completely absorbed upon transmitting through the grid. Accordingly, the attenuation of the s-polarized light is achieved. This attenuation of the s-polarized light would not be achieved with a conventional aspect ratio.

For the p-polarized light (TM wave), on the other hand, the propagation light beam that has transmitted through the coarse part and the propagation light beam that has transmitted through the dense part are not weakened by each other. The propagation light beam that has transmitted through the coarse part would not have an uniform phase difference relative to the propagation light beam that has transmitted through the dense part because the electric field of the p-polarized light originally has a distribution in the gap direction although the even magnetic field is distorted in the gap direction as shown in Fig. 7.

The inventors assume that the steep increase of the extinction ratio of the localized grid structure shown in Fig. 5 reflects the above-described phenomena. Specifically, as the linear segments of the grid are arranged at uneven intervals or gaps, the electric field is more concentrated and enhanced such that the attenuation of the s-polarized light due to the absorption of the light in the grid is enhanced. In addition, because the linear segments of the grid are arranged at uneven gaps such that the dense part propagating light has a phase difference from the coarse part propagating light by $\pi/2$ or more, the counterbalancing of the two kinds of the light beams additionally takes place due to the phase difference between the two kinds of the light beams. Accordingly, the attenuation of the s-polarized light is further enhanced, and the extinction ratio is further increased. The inventors assume that the results shown in Fig. 5 represent the above-described explanation.

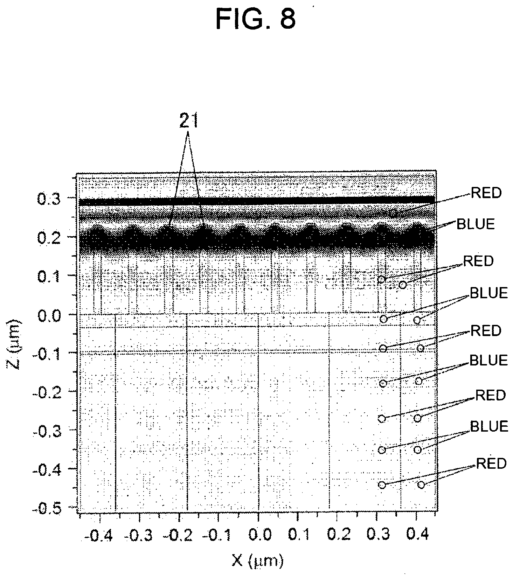

Fig. 8 shows results obtained when a similar simulation experiment was applied to a grid polarizer with the linear segments being arranged at even intervals (t = T). The conditions of the simulation are similar to those of Fig. 5 and Fig. 6, except for t being equal to T. Thus, the aspect ratio is 8.5. To show the comparison to Fig. 6, the propagation of the s-polarized light is indicated in Fig. 8. As shown in Fig. 8, when t is equal to T, some phase delay occurs, and the even electric field component of the s-polarized light is split and distorted by the grid in the x-direction. However, there is substantially no phase difference when the light exits from the grid. The inventor assume that this is because the spatial refractive index distribution does not become uneven very much, and therefore the resulting phase difference is small. Accordingly, the inventors assume that the phase difference between the light beams is moderated and eliminated when the light beams exit from the grid and the wave fronts overlap each other. As such, the inventors assume that the attenuation of the s-polarized light by means of the phase delay of the dense part propagating light is a phenomenon that takes place when the grid has a certain size (amount) of localization in the arrangement of the linear segments and the spatial refractive index distribution becomes uneven to a certain extent.

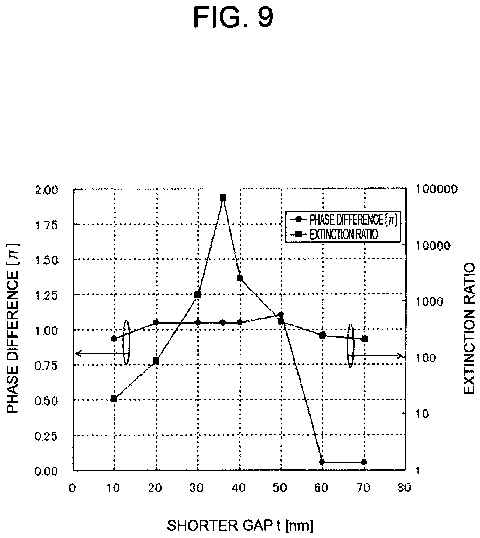

Fig. 9 shows results of the simulation experiment that confirmed the above-mentioned assumptions. Specifically, Fig. 9 shows the calculation results obtained by the FDTD (Finite-difference time-domain) method and indicates the relation between the localization ratio and the phase difference, which is obtained from the simulation shown in Fig. 5 to Fig. 7. The calculation was conducted with the analysis software "FULLWAVE" (product name) marketed by CYBERNET SYSTEMS CO., LTD. In Fig. 9, the horizontal axis indicates the narrower gap t, the left vertical axis indicates the phase difference, and the right vertical axis indicates the extinction ratio.

As shown in Fig. 9, as the gap t becomes narrower (i.e., as the reciprocal of the localization ratio T/t increases), the phase difference steeply increases from when the gap t becomes narrower than approximately 60 nm. In the range of the gap t being from 50 nm to 10 nm, the phase difference becomes $\pi$ (exactly the opposite phase). Thus, the extinction ratio increase is achieved in the range of the gap t being from 50 nm to 10 nm, but this extinction ratio increase is not uniform. The extinction ratio increase has a peak when the gap t is around 36 nm. The reason for this peak is considered as follows. Specifically, the inventors assume that if the gap t is between about 50 nm to about 40 nm, then the concentration of the electric field at the dense parts is relatively weak, and the phase difference is not strong very much with regard to its capability of weakening the electric field at the coarse parts. In contrast, if the gap t is between about 20 nm to about 10 nm, then the concentration of the electric field becomes large at the dense parts, but the area of the coarse parts increases and therefore the phase difference becomes relatively weak with regard to its capability of weakening the electric field at the coarse parts. The inventors assume that when the gap t is between about 40 nm to about 30 nm, the concentration of the electric field at the dense parts has a good balance with the area of the coarse parts (total widths of the coarse parts), and therefore the two kinds of light beams weaken each other in a desired manner.

In any case, when the phase difference between the light beam propagating the dense part and the light beam propagating the coarse part is equal to or greater than $\pi/2$, then the weakening between the two light beams takes place theoretically, and the s-polarized light beam attenuates. As a result, the extinction ratio increases. This advantage is not obtained by increasing the aspect ratio although the grid height (height of the linear segments) should be appropriately decided in consideration of the wavelength and the refractive index. In fact, as shown in Fig. 5, even if the grid has an aspect ratio of 8.5, the extinction ratio obtained is very high, i.e., far beyond $1 \times 10^4$. Manufacturing the grid having this level of the grid ratio is not very difficult.

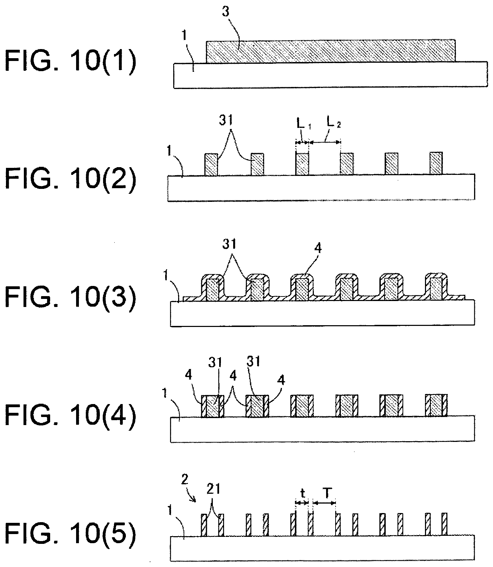

Next, a method of manufacturing a grid polarizer according to the embodiment will be described. Fig. 10 is a set of schematic views that illustrate in combination the method of manufacturing the grid polarizer of the first embodiment. Firstly, in this manufacturing method, an intermediate thin film 3 is formed on a transparent substrate 1, as shown in Fig. 10(1). The intermediate thin film 3 is a thin film that becomes a basis to form a grid thin film. Because the intermediate thin film 3 will ultimately be removed, there is no particular limitation on the material of the intermediate thin film 3. The only requirements are form-stability and quick removability upon etching. For example, the material of the intermediate thin film 3 may be an organic material such as photoresist, or carbon.

Subsequently, as shown in Fig. 10(2), a photolithography technology is used to apply a patterning process to the intermediate thin film 3. Specifically, a photoresist is applied over an entire surface of the intermediate thin film, and the exposure process, the developing process and the etching process are applied to pattern the intermediate thin film 3. The patterning process is applied to the intermediate thin film 3 such that the intermediate thin film 3 becomes a stripe shape, i.e., a plurality of linear portions 31, extending in a direction perpendicular to the drawing sheet. The linear portions 31 are referred to as "intermediate linear segments" in the following description. The width $L_1$ of each intermediate linear segment 31 and the distance (gap) $L_2$ between each two adjacent intermediate linear segments 31 decide the gaps t and T between the linear segments 21 of the grid 2 (ultimate product).

Subsequently, as shown in Fig. 10(3), a grid thin film 4 is formed on side walls of each groove defined between each two adjacent intermediate linear portions 31. It should be noted that it is sufficient to form the grid thin film 4 on only the side walls of each groove, but usually the grid thin film 4 is formed over the entire surface of each groove and the top of each intermediate linear segment. The grid thin film 4 is a thin film made from the same material as the grid 2 (e.g., titanium oxide). For example, the grid thin film 4 is formed by an ALD (Atomic Layer Deposition) method. After forming the grid thin film 4, an anisotropic etching is applied to the grid thin film 4. The anisotropic etching is performed in the thickness direction of the transparent substrate 1. The anisotropic etching provides the configuration shown in Fig. 10(4). Specifically, after the anisotropic etching, the grid thin film 4 remains on both side walls of each intermediate linear segment 31.

Subsequently, an etching process is applied with an etchant that can only etch the material of the intermediate thin film 3 to remove all the intermediate linear segments 31. As a result, the grid 2 having the linear segments 21 is formed on the transparent substrate 1. In this manner, the grid polarizer of this embodiment is obtained. The grid polarizer has a predetermined localization ratio t/T, and the dimensions $L_1$ and $L_2$ of the intermediate linear segments 31 are decided on the basis of the grid width W while achieving the predetermined localization ratio.

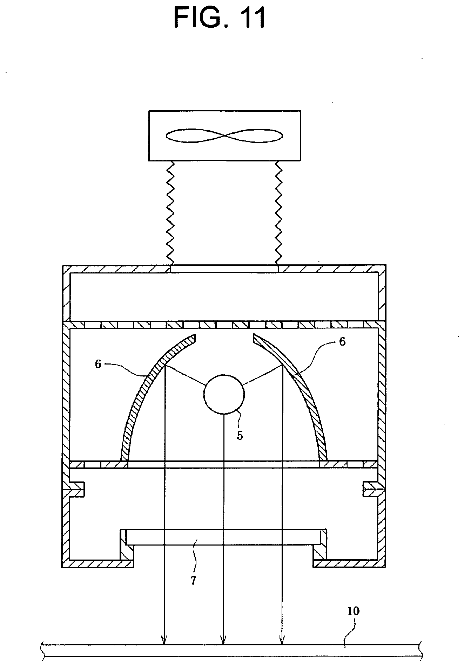

Now, an exemplary use of the grid polarizer will be described. Fig. 11 shows an exemplary use of the grid polarizer of this embodiment. Specifically, Fig. 11 illustrates a schematic cross-sectional view of a photo-alignment system (photo-orientation apparatus) that includes the grid polarizer. The apparatus shown in Fig. 11 is a photo-alignment apparatus to provide a photo-alignment film for the above-described liquid crystal display device. The photo-alignment apparatus irradiates an object (workpiece) 10 with a polarized light beam to align a molecular structure of the workpiece 10 in a certain direction. Thus, the workpiece 10 is a film material (blank) for a photo-alignment film. For example, the workpiece 10 is a sheet made from polyimide. When the workpiece 10 has a sheet shape, a roll-to-roll conveyance machine is employed, and the workpiece 10 is irradiated with the polarized light beam while the workpiece 10 is being conveyed. It should be noted that a liquid crystal substrate, which is covered with a photo-alignment film material, may be used as a workpiece. In such instance, the liquid crystal substrate may be placed on a stage and conveyed by the stage, or may be conveyed by a conveyor.

The apparatus shown in Fig. 11 includes a light source 5, a pair of mirrors 6 that extend behind the light source 5, and a grid polarizer 7 located between the light source 5 and the workpiece 10. The grid polarizer 7 is the grid polarizer of the above-described embodiment. In many cases, the photo-alignment requires the irradiation of ultraviolet light. Thus, an ultraviolet lamp, such as a high-pressure mercury lamp, is used as the light source 5. The light source 5 is elongated (has a certain length) in a direction perpendicular to the conveying direction of the workpiece 10 (i.e., in the direction perpendicular to the drawing sheet).

As described above, the grid polarizer 7 selectively causes the p-polarized light to transmit through the grid polarizer, on the basis of the length of the grid 2. Therefore, the grid polarizer 7 is precisely disposed and has a predetermined posture relative to the workpiece 10 such that the polarization axis of the p-polarized light is directed to the direction of the photo-alignment. It is difficult to manufacture a grid polarizer that has a large size. Thus, when a large area should be irradiated with the polarized light, a plurality of grid polarizers may be arranged on a single plane. In such configuration, the single plane on which the grid polarizers are arranged is parallel to the surface of the workpiece 10, and the length direction (longitudinal direction) of the linear segments of each grid polarizer has a predetermined direction relative to the workpiece.

The above-described grid polarizer 7 of the photo-alignment apparatus has a high extinction ratio. Therefore, the photo-alignment apparatus can perform high-quality photo-alignment process, and can form a high-quality photo-alignment film. Thus, the photo-alignment apparatus can greatly contribute to manufacturing a high-quality display device.

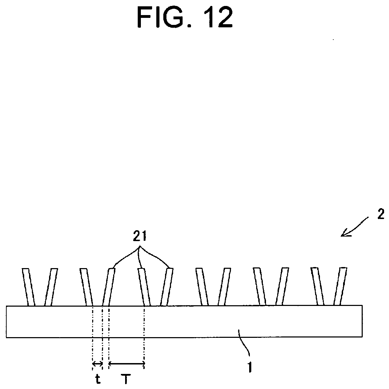

Now, a grid polarizer according to a second embodiment of the present invention will be described. Fig. 12 shows a schematic front view of the grid polarizer according to the second embodiment. In the first embodiment, the linear segments 21 of the grid 2 stand in a direction perpendicular to the transparent substrate 1. In the second embodiment, on the other hand, the linear segments 21 of the grid 2 stand in a direction oblique (inclined) to the transparent substrate 1. As shown in Fig. 12, two adjacent linear segments 21, which makes a pair, stand in a generally V shape from the transparent substrate when viewed from the front. The two linear segments, which form a generally V shape in combination, makes a pair, and a plurality of pairs of linear segments 21 are provided.

In the second embodiment, the localization of the linear segments in the grid (localized grid structure) is achieved when the light exit ends of the linear segments are looked at. Specifically, the distance (gap) between the two adjacent linear segments 21 in each pair of linear segments is the short distance t at the light exit ends of the linear segments. As shown in Fig. 12, the distance between the two adjacent linear segment pairs is the large distance T at the light exit ends of the linear segments. In other words, the distance between the right linear segment in one pair and the left linear segment in an adjacent pair on the right is the large distance T. This is also true to one pair and an opposite adjacent pair (adjacent pair on the left). The distance between the left linear segment in one pair and the right linear segment in the adjacent pair on the left is the large distance T at the light exit ends of the linear segments.

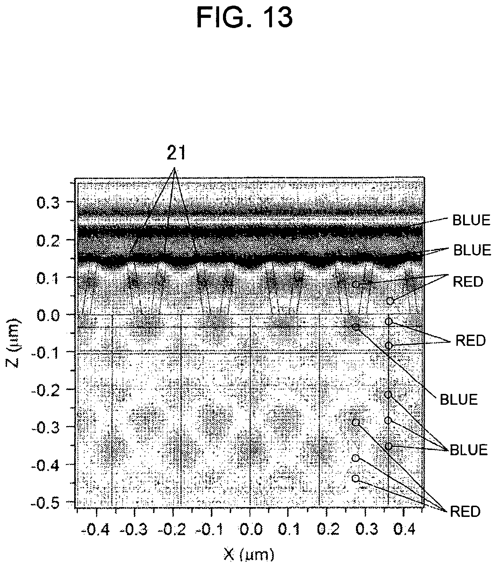

With such localized grid structure, the inventors conducted a simulation experiment and confirmed that this localized grid structure provided the similar advantages to the first embodiment. Fig. 13 shows the confirmed facts. Specifically, Fig. 13 shows results of the simulation experiment when the simulation experiment was applied to the structure shown in Fig. 12. Fig. 13 shows the results of the simulation experiment, which were obtained with the analysis software FULLWAVE. Fig. 13 is a drawing that is obtained by black-white conversion from the color image. In this drawing, the actual colors in the original image are mentioned by words for reference. Similar to Fig. 6, Fig. 13 depicts the propagation of the s-polarized light. Each two linear segments 21 and 21 that form a V shape in combination define each dense part. The coarse part is defined by one linear segment 21 in one pair and an adjacent linear segment 21 in a next pair. For example, the right linear segment 21 in one pair and the left linear segment 21 in the right pair form the coarse part.

As shown in Fig. 13, when the s-polarized light exits from the grid polarizer of the second embodiment, a phase difference over $\pi/2$ is produced between the light beam propagating the dense part and the light beam propagating the coarse part. Accordingly, the light beam propagating the dense part and the light beam propagating the coarse part weaken each other, and therefore the light beams propagating the grid polarizer are attenuated as a whole. Consequently, the grid polarizer can provide (achieve) a high extinction ratio without increasing the aspect ratio of the grid. Fig. 5 also shows the results (extinction ratio and the transmissivity) of the simulation experiment applied to the grid polarizer of the second embodiment. For the sake of illustration, the value of the gap t is not indicated in Fig. 5. In the simulation experiment of the second embodiment, the initial value (starting value) of the gap t was 70 nm, and the gap t was gradually decreased. As the gap t altered in this manner, the transmissivity gradually decreased whereas the extinction ratio steeply increased when the gap t reached about 30 nm. The extinction ratio reached its maximum value, 8300, when the gap t was 24 nm. The inventors assume that the reason why the value of the gap t when the extinction ratio reaches the maximum value is smaller than the value of the gap t of the first embodiment is relevant to the shape of "V" of the linear segments of the grid. Specifically, even the dense part has an increased gap at the light receiving ends of the linear segments, and therefore the inventors assume that the concentration of the electric field and the phase delay are not easy to obtain unless the gap at the light exit ends of the linear segments is more reduced.

In the second embodiment, the two linear segments 21 and 21 makes a pair, the gap (distance) between these two linear segments is the short distance t, and the gap between two adjacent pairs is the large distance T. This is similar to the first embodiment. The second embodiment is different from the first embodiment in that the linear segments 21 stand aslant from the transparent substrate 1, not vertically from the transparent substrate 1. Although not illustrated and not described in detail, if the two linear segments, which make a pair and define the dense part, are inverted from the grid configuration of Fig. 12 so that the two linear segments make a generally inverted V shape, then the increase of the extinction ratio is small. The inventors assume that this is because the localization ratio becomes smaller at the light exit ends of the linear segments of the grid 2 when the linear segments stand like the inverted V on the transparent substrate, and therefore the concentration of the electric field and the generation of the phase difference are moderated.

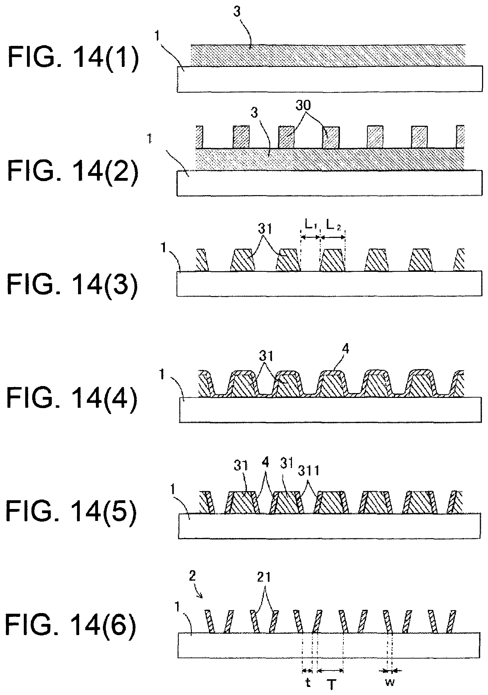

A preferred method of manufacturing the grid polarizer according to the second embodiment will be described with reference to Fig. 14. Fig. 14 is a set of schematic views that illustrate in combination the preferred method of manufacturing the grid polarizer of the second embodiment. When the grid polarizer of the second embodiment is manufactured, an intermediate thin film 3 is formed on the transparent substrate 1, as shown in Fig. 14(1). This is similar to Fig. 10(1). The intermediate thin film 3 is a thin film that becomes a basis to form a grid thin film.

Subsequently, a photolithography technology is used to apply a patterning process to the intermediate thin film 3. Specifically, a photoresist is applied over an entire surface of the intermediate thin film, and the exposure process, the developing process and the etching process are applied to pattern the photoresist 30 such that the photoresist 30 becomes a stripe shape, as shown in Fig. 14(2). Then, as shown in Fig. 14(3), the pattern of the photoresist 30 is used as a mask and the etching process is applied to the intermediate thin film 3 thereby forming a strip shape (which includes a plurality of intermediate linear segments 31).

Different from the manufacturing method shown in Fig. 10, the etching to be applied to the intermediate thin film in Fig. 14 is a "rather" isotropic etching, not the completely anisotropic etching. In the "rather" isotropic etching, the small vertical bias electric power is set to the substrate in the dry etching, or an additional gas such as $C_xH_yF_z$ is introduced during the dry etching. The small vertical bias electric power and the additional gas may be used together. When the rather isotropic etching is applied, each intermediate linear segment 31 becomes a trapezoid in its cross-sectional view, as shown in Fig. 14(3). Specifically, each intermediate linear segment has tapered side surfaces 311. The distance $L_1$ between the two adjacent intermediate linear segments 31, measured at the bottoms of the intermediate linear segments, and the width $L_2$ of each intermediate linear segment 31, measured at the bottoms of the intermediate linear segment, decide the gaps t and T of the linear segments 21 of the ultimate grid 2.

After the patterning process is applied to the intermediate thin film 3 in the above-described manner, the grid thin film 4 is formed over the intermediate thin film as shown in Fig. 14(4). The grid thin film 4 is formed by the ALD method or the like, as in the first embodiment.

The resulting grid thin film 4 extends over the side faces and the top of each intermediate linear segment 31. Then, the anisotropic etching is performed to the grid thin film 4 in the thickness direction of the transparent substrate 1 such that the grid thin film 4 remains on the opposite side faces (tapered surfaces) 311 of each intermediate linear segment 31, as shown in Fig. 14(5).

After that, the etching process is applied with an etchant that can only etch the material of the intermediate thin film 3 to remove all the intermediate linear segments 31. As a result, the structure of the grid 2 shown in Fig. 14(6) is obtained. Specifically, the two linear segments 21 in each pair extend like the inverted V shape. As understood from Fig. 14, the gap t is obtained by subtracting 2w from $L_1$ (t = $L_1$ - 2w), and T is equal to $L_2$ (T = $L_2$).

The manufacturing method shown in Fig. 14 is advantageous because it is easy to practice. This is because the side faces 311 of the intermediate thin film 3 are the tapered faces when the patterning process is applied to the intermediate thin film 3. When the grid thin film 4 is formed in Fig. 14(4), the grid thin film 4 is easily deposited on the surface of the intermediate thin film 3 if the intermediate thin film 3 has a trapezoid shape. In the manufacturing method shown in Fig. 10, the linear segments 31, which is constituted by the intermediate thin film 3, stand vertically from the transparent substrate 1. Thus, it is difficult to uniformly (evenly) deposit the grid thin film 4 over the entire surface of each linear segment 31 in the step of Fig. 10(3). If the material of the grid thin film 4 is a material that can be deposited by the ALD method, then the grid thin film 4 may be uniformly deposited over the entire surface of each linear segment in a relatively easy manner. However, if the grid material is a material that can only be deposited by sputtering or vapor deposition, then the intermediate thin film 3 preferably has a trapezoid shape to facilitate the forming of the grid thin film 4. As such, the configuration of the grid polarizer according to the second embodiment as shown in Fig. 12 is advantageous in terms of easiness of the manufacturing.

In the foregoing, the target wavelength of the ultraviolet light is 254 nm, but it should be noted that the target wavelength may be shorter than 254 nm, for example, 200 nm or less. Alternatively, the target wavelength of the ultraviolet light may be longer than 254 nm. Alternatively, the target light may have a wavelength in a visible range. Although the distance (gap) t and the distance (gap) T appear alternately in each of the above-described embodiments, these distances do not have to appear alternately as long as these distances are localized in a periodic fashion. In the first embodiment, for example, three linear segments that are provided adjacent to each other at short intervals t may form a set of linear segments, and a plurality of such sets of linear segments may be formed adjacent to each other at longer intervals T.

REFERENCE NUMERALS AND SYMBOLS

1: Transparent substrate
2: Grid
21: Linear segment
3: Intermediate thin film
4: Grid thin film
5: Light source
6: Mirror
7: Grid polarizer
10: Workpiece

**Claims**

1. A grid polarizer comprising:

a transparent substrate (1) made from quartz glass; and
a stripe-shaped grid (2) provided on the transparent substrate (1), the grid including a plurality of linear segments (21),
the grid (2) being made from dielectrics or semiconductors,
the grid being having portions that satisfy, in effect, relation of t < T in a periodic fashion, where for each said linear segment (21) of the grid, t represents a first gap between the linear segment concerned and an adjacent linear segment on one side of the linear segment concerned, and T represents a second gap between the linear segment concerned and another adjacent linear segment on an opposite side of the linear segment concerned, wherein the gaps t and T are air gaps,
**characterized by**
a ratio of t/T having a value that causes a phase of dense part propagating light to delay at least $\pi/2$ for ultraviolet light relative to a phase of a coarse part propagating light, where polarized light that has an electric field component in a length direction of each said linear segment of the grid is s-polarized light, the s-polarized light propagating between two linear segments that are adjacent to each other over the first gap t is the dense part propagating light, and the s-polarized light propagating between two linear segments that are adjacent to each other over the second gap T is the coarse part propagating light, the first gap t being a distance measured at a light exit of the dense part propagating light, the second gap T being a distance measured at a light exit of the coarse part propagating light, wherein the first gap t is from 30 nm to 40 nm and wherein the total of t + T is equal to 140 nm.

**2.** The grid polarizer according to claim 1, wherein the grid (2) includes a plurality of pairs of said linear segments (21) provided on the transparent substrate (1), with each said pair being constituted by two adjacent said linear segments,
the s-polarized light (Ls) propagating between the two linear segments of each said pair being the dense part propagating light, and a distance between the two linear segments of each said pair being the first gap t,
the s-polarized light propagating between each two adjacent pairs being the coarse part propagating light, and a distance between the each two adjacent pairs being the second gap T.

**3.** The grid polarizer according to claim 2, wherein the distance (t) between the two linear segments in each said pair gradually decreases in a propagating direction of the dense part propagating light.

**4.** A photo-alignment apparatus comprising:

a light source (5); and
a grid polarizer (7) according to claim 1, 2 or 3, the grid polarizer being disposed between a light irradiation area (10), where a photo-alignment film is placed, and the light source (5).

**5.** The grid polarizer according to claim 2, wherein the distance (t) between the two linear segments (21) in each said pair is constant in a propagating direction of the dense part propagating light.

**6.** The grid polarizer according to claim 1, 2 or 3, wherein the grid (2) is made from titanium oxide, and the transparent substrate is made from silica.

**7.** The grid polarizer according to claim 1, 2, 3 or 6, wherein said plurality of linear segments (21) stand vertically from the transparent substrate (1).

**8.** The grid polarizer according to claim 1, 2, 3 or 6, wherein said plurality of linear segments (21) stand slant from the transparent substrate (1).


## Patentansprüche

**1.** Gitterpolarisator, umfassend:

ein transparentes Substrat (1) aus Quarzglas und
ein auf dem transparenten Substrat (1) vorhandenes streifenförmiges Gitter (2), wobei das Gitter eine Vielzahl linearer Segmente (21) umfasst,
wobei das Gitter (2) aus Dielektrika oder Halbleitern hergestellt ist,
wobei das Gitter Abschnitte aufweist, die im Effekt periodisch ein Verhältnis von t < T erfüllen,
wobei für jedes lineare Segment (21) des Gitters t einen ersten Spalt zwischen dem betreffenden linearen Segment und einem benachbarten linearen Segment auf einer Seite des betreffenden linearen Segments repräsentiert und T einen zweiten Spalt zwischen dem betreffenden linearen Segment und einem weiteren benachbarten linearen Segment auf einer entgegengesetzten Seite des betreffenden linearen Segments repräsentiert, wobei es sich bei den Abständen t und T um Luftspalte handelt,
**dadurch gekennzeichnet, dass**
ein Verhältnis von t/T einen Wert aufweist, der bewirkt, dass eine Phase eines dichten Teils des sich ausbreitenden Lichts um mindestens $\pi/2$ für ultraviolettes Licht relativ zu einer Phase eines groben Teils des sich ausbreitenden Lichts verzögert wird, wobei polarisiertes Licht, das eine elektrische Feldkomponente in einer Längsrichtung jedes linearen Segments des Gitters aufweist, s-polarisiertes Licht ist, das s-polarisierte Licht, das sich zwischen zwei linearen Segmenten ausbreitet, die zueinander über den ersten Spalt t benachbart sind, der dichte Teil des sich ausbreitenden Lichts ist, und das s-polarisierte Licht, das sich zwischen zwei linearen Segmenten ausbreitet, die zueinander über den zweiten Spalt T benachbart sind, der grobe Teil des sich ausbreitende Lichts ist, wobei es sich bei dem ersten Spalt t um einen an einem Lichtaustritt des dichten Teils des sich ausbreitenden Lichts gemessenen Abstand und bei dem zweiten Spalt T um einen an einem Lichtaustritt des groben Teils des sich ausbreitenden Lichts gemessenen Abstand handelt, wobei der erste Spalt t 30 nm bis 40 nm beträgt und wobei die Summe aus t + T gleich 140 nm ist.

**2.** Gitterpolarisator nach Anspruch 1, wobei das Gitter (2) eine Vielzahl auf dem transparenten Substrat (1) vorhandener Paare der linearen Segmente (21) umfasst, wobei jedes Paar aus zwei benachbarten linearen Segmenten gebildet ist,
wobei es sich bei dem sich zwischen den zwei linearen Segmenten jedes Paares ausbreitenden s-polarisierten Licht (Ls) um den dichten Teil des sich ausbreitenden Lichts und bei einem Abstand zwischen den zwei linearen Segmenten jedes Paares um den ersten Spalt t handelt,
wobei es sich bei dem sich zwischen jeweils zwei benachbarten Paaren ausbreitenden s-polarisierten Licht um den groben Teil des sich ausbreitenden Lichts und bei einem Abstand zwischen den zwei benachbarten Paaren um den zweiten Spalt T handelt.

**3.** Gitterpolarisator nach Anspruch 2, wobei der Abstand (t) zwischen den zwei linearen Segmenten jedes Paares in einer Ausbreitungsrichtung des dichten Teils des sich ausbreitenden Lichts allmählich abnimmt.

**4.** Photoausrichtungsvorrichtung, umfassend:

eine Lichtquelle (5) und
einen Gitterpolarisator (7) nach Anspruch 1, 2 oder 3, wobei der Gitterpolarisator zwischen einem Lichteinstrahlungsbereich (10), in dem ein Photoausrichtungsfilm platziert ist, und der Lichtquelle (5) angeordnet ist.

**5.** Gitterpolarisator nach Anspruch 2, wobei der Abstand (t) zwischen den zwei linearen Segmenten (21) jedes Paares in einer Ausbreitungsrichtung des dichten Teils des sich ausbreitenden Lichts konstant ist.

**6.** Gitterpolarisator nach Anspruch 1, 2 oder 3, wobei das Gitter (2) aus Titanoxid und das transparente Substrat aus Siliciumdioxid hergestellt ist.

**7.** Gitterpolarisator nach Anspruch 1, 2, 3 oder 6, wobei die Vielzahl linearer Segmente (21) vertikal von dem transparenten Substrat (1) absteht.

**8.** Gitterpolarisator nach Anspruch 1, 2, 3 oder 6, wobei die Vielzahl linearer Segmente (21) schräg von dem transparenten Substrat (1) absteht.

**Revendications**

**1.** Polariseur à grille comprenant:

un substrat transparent (1) fabriqué à partir de verre de quartz; et
une grille (2) en forme de bande disposée sur le substrat transparent (1), la grille comportant une pluralité de segments linéaires (21),
la grille (2) étant fabriquée à partir de diélectriques ou de semi-conducteurs,
la grille ayant des portions qui satisfont en pratique à la relation t < T d'une manière périodique, où pour chacun desdits segments linéaires (21) de la grille, t représente un premier écartement entre le segment linéaire concerné et un segment linéaire adjacent sur un côté du segment linéaire concerné, et T représente un second écartement entre le segment linéaire concerné et un autre segment linéaire adjacent sur un côté opposé du segment linéaire concerné, dans lequel les écartements t et T sont des lames d'air, **caractérisé par**
un rapport t/T ayant une valeur qui fait qu'une phase de la lumière se propageant de la partie dense est retardée d'au moins $\pi/2$ pour la lumière ultraviolette relativement à une phase de la lumière se propageant de la partie grossière, dans lequel la lumière polarisée qui a une composante de champ électrique dans le sens de la longueur de chaque dit segment linéaire de la grille est une lumière polarisée s, la lumière polarisée s se propageant entre deux segments linéaires qui sont adjacents l'un à l'autre sur le premier écartement t est la lumière se propageant de la partie dense, et la lumière polarisée s se propageant entre deux segments linéaires qui sont adjacents l'un à l'autre sur le second écartement T est la lumière se propageant de la partie grossière, le premier écartement t étant une distance mesurée à une sortie de lumière de la lumière se propageant de la partie dense, le second écartement T étant une distance mesurée à une sortie de lumière de la lumière se propageant de la partie grossière, le premier écartement t étant compris entre 30 nm et 40 nm et la somme de t + T étant égale à 140 nm.

**2.** Polariseur à grille selon la revendication 1, dans lequel la grille (2) comprend une pluralité de paires desdits segments linéaires (21) placés sur le substrat transparent (1), chaque dite paire étant constituée par deux dits segments linéaires adjacents, la lumière polarisée s (Ls) se propageant entre les deux segments linéaires de chaque dite paire étant la lumière se propageant de la partie dense, et une distance entre les deux segments linéaires de chaque dite paire étant le premier écartement t, la lumière polarisée s se propageant entre chaque deux paires adjacentes étant la lumière se propageant de la partie grossière, et une distance entre chaque deux paires adjacentes étant le second écartement T.

**3.** Polariseur à grille selon la revendication 2, dans lequel la distance (t) entre les deux segments linéaires dans chaque dite paire diminue progressivement dans une direction de propagation de la lumière se propageant de la partie dense.

**4.** Dispositif de photo-alignement comprenant:

une source de lumière (5); et
un polariseur à grille (7) selon l'une des revendications 1, 2 ou 3, le polariseur à grille étant disposé entre une zone (10) d'irradiation de la lumière, où est placé un film de photo-alignement, et la source de lumière (5).

**5.** Polariseur à grille selon la revendication 2, dans lequel la distance (t) entre les deux segments linéaires (21) dans chaque dite paire est constante dans une direction de propagation de la lumière se propageant de la partie dense.

6. Polariseur à grille selon l'une des revendications 1, 2 ou 3, dans lequel la grille (2) est fabriquée à partir d'oxyde de titane, et le substrat transparent est fabriqué à partir de silice.

7. Polariseur à grille selon l'une des revendications 1, 2, 3 ou 6, dans lequel ladite pluralité de segments linéaires (21) se dressent verticalement à partir du substrat transparent (1).

8. Polariseur à grille selon l'une des revendications 1, 2, 3 ou 6, dans lequel ladite pluralité de segments linéaires (21) se dressent de manière oblique à partir du substrat transparent (1).

# FIG. 1

EP 3 118 659 B1

# FIG. 2

FIG. 3

# FIG. 4

FIG. 5

# FIG. 6

FIG. 7

# FIG. 8

# FIG. 9

FIG. 10(1)

FIG. 10(2)

FIG. 10(3)

FIG. 10(4)

FIG. 10(5)

# FIG. 11

# FIG. 12

# FIG. 13

FIG. 14(1)

FIG. 14(2)

FIG. 14(3)

FIG. 14(4)

FIG. 14(5)

FIG. 14(6)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011008172 A
- US 20140009823 A1
- US 20080137188 A1
- US 20090231702 A1
- WO 2013032570 A1